# EUROPÄISCHE PATENTANMELDUNG

(11) **EP 0 654 487 A1**
(43) Veröffentlichungstag der Anmeldung: **24.05.1995**
(21) Anmeldenummer: 94117184.5
(22) Anmeldetag: 31.10.1994
(51) Int. Cl.: C08F 210/14, C08F 220/00, B44C 1/17

(54) **Wachshaltiges Trennmittel für thermisch transferierbare Beschriftungs- und Dekorationssysteme**

(30) Priorität: 13.11.1993 DE 4338879
(71) Anmelder: HOECHST AKTIENGESELLSCHAFT, D-65929 Frankfurt am Main (DE)
(72) Erfinder: Rieger, Klaus, Dr., D-86368 Gersthofen (DE); Heinrichs, Franz-Leo, Dr., D-86456 Gablingen (DE); Hohner, Gerd, Dr., D-86368 Gersthofen (DE)

(57) **Zusammenfassung**

Ein hoch wirksames Trennmittel für thermisch transferierbare Beschriftungs- und Dekorationssysteme enthält als Hauptbestandteil ein Copolymerisat. Das erfindungsgemäß zu verwendende, insbesondere seifenfreie Copolymerisat zeigt nicht nur während der Wärmebelastung ganz ausgezeichnete Farbstabilität, sondern vor allem eine Trennwirkung, die den Werten seifenhaltiger Montanwachse entspricht.

## Beschreibung

Die Erfindung bezieht sich auf ein wachshaltiges Trennmittel für thermisch transferierbare Beschriftungs- und Dekorationssysteme, welches als Hauptbestandteil ein bestimmtes Copolymerisat enthält.

Zur Dekoration und Beschriftung von vielen Artikeln des täglichen Bedarfes sind seit vielen Jahren Verfahren bekannt, die darauf beruhen, daß ein auf einem Folienträger aufgedrucktes Bild durch Anwendung von Wärme auf den zu dekorierenden oder zu beschriftenden Gegenstand übertragen wird. Zur Fixierung des zu übertragenden Schriftbildes ist eine heißaktivierbare Kleberschicht notwendig, die im mehrschichtigen Übertragungssystem mit dem zu dekorierenden Gegenstand direkt in Berührung kommt. Damit nach erfolgter Übertragung die Trägerfolie oder das Trägerpapier einwandfrei von dem meistens durch einen Schutzlack geschützten Schriftbild getrennt werden kann, ist eine zwar dünne, aber gerade deswegen sehr effiziente Trennschicht notwendig.

Verschiedene Übertragungsverfahren, der Aufbau solcher Systeme und unterschiedliche Trennschichten sind Gegenstand vieler Patente und Veröffentlichungen (vgl. US 2 862 832, US 2 984 413, US 2 990 311)

Für die Ausbildung wirksamer Trennschichten werden häufig wachsartige Verbindungen unterschiedlicher Zusammensetzung beschrieben. Dabei kommen neben unpolaren, einfachen Kohlenwasserstoff-Wachsen auch durch Oxidation solcher Produkte hergestellte Oxidate zur Anwendung. Weiterhin ist die ausnehmend gute Trennwirkung von seifenhaltigen Wachsen seit langem bekannt. Eine besonders wirksame Trennschicht enthält überwiegend teilverseifte Montanesterwachse in Abmischung mit anderen Wachsen (vgl. US 3 616 015).

Seifenhaltige Wachse, auch solche auf Montanwachsbasis, haben häufig eine schwache Eigenfarbe und neigen zur Vergilbung.

Da nach dem Transfervorgang die zwar sehr dünnen Trennschichten in Spuren auf den zu dekorierenden Gegenstand verbleiben, ist es seit langem ein Wunsch der Benutzer dieser Transfersysteme, daß diese spurenhaften Reste unsichtbar bleiben und selbst bei längerer Einwirkung von Sonnenlicht sich nicht durch Verfärbungen unangenehm bemerkbar machen.

Es ist auch bekannt, daß die meistens das zu übertragende Druckbild auf allen Seiten übergreifene Trennbeschichtung auf dem zu dekorierenden Artikel einen schwach sichtbaren sogenannten Halo-Effekt ergibt, der bei wachshaltigen Trennbeschichtungen im Laufe der Zeit nachgilbt und insbesondere bei transparenten Hohlkörpern, beispielsweise Kunststoff-Flaschen, zu sehen ist.

Es bestand daher die Aufgabe nach Trennmitteln zu suchen, die eine sehr helle Farbe (fast keine Eigenfarbe) besitzen sollten bei hoher Transparenz und geringer Vergilbungsneigung.

Es wurde nun gefunden, daß diese Aufgabe durch die Verwendung bestimmter Copolymerisate gelöst werden kann.

Die Erfindung betrifft somit ein wachshaltiges Trennmittel für thermisch transferierbare Beschriftungs- und Dekorationssysteme im wesentlichen bestehend aus einem Copolymerisat aus
20 bis 99,5 Gew.-Teilen Einheiten, die sich von einem C₁₂-C₆₀-α-Olefin ableiten,
0,1 bis 50 Gew.-Teilen Einheiten, die sich von einer Carbonsäure der Formel CH₂ = CR¹-COOH ableiten,
0,1 bis 60 Gew.-Teilen Einheiten, die sich von einem Carbonsäureester der Formel CH₂ = CR¹-COOR² ableiten, wobei in diesen Formeln R¹ für ein Wasserstoffatom oder eine Methylgruppe und R² für einen geradkettigen oder verzweigten Alkylrest mit 1 bis 6 C-Atomen stehen, und
0,0 bis 30 Gew.-Teilen Einheiten, die sich von Styrol, 3-Methylstyrol, 4-Methylstyrol oder α-Methylstyrol ableiten.

Das erfindungsgemäße Trennmittel besteht im wesentlichen aus einem Copolymerisat aus α-Olefinen, ungesättigten Carbonsäuren und ungesättigten Carbonsäureestern.

Als α-Olefine kommen solche mit einer Kettenlänge von 12 bis 60, bevorzugt von 18 bis 60, besonders bevorzugt von 24 bis 60 C-Atomen in Frage. Es können sowohl kettenreine Olefine als auch Olefin-Gemische eingesetzt werden, wie sie beispielsweise in den bekannten Herstellverfahren als Destillationsschnitte oder Destillationsrückstände anfallen. Technische α-Olefingemische, insbesondere solche mit höherer Kettenlänge, können neben 1-Alkenen mehr oder minder hohe Mengen innen- und seitenständige olefinische Doppelbindungen (Vinyliden- und Vinylengruppen) enthalten.

Als ungesättigte Carbonsäuren werden für die erfindungsgemäß zu verwendenden Copolymerisate Verbindungen der Formel CH₂ = CR¹-COOH, worin R¹ ein Wasserstoffatom oder eine Methylgruppe ist, also beispielsweise Acryl- oder Methacrylsäure eingesetzt. Als ungesättigte Carbonsäureester werden Verbindungen der allgemeinen Formel CH₂ = CR¹-COOR² verwendet, wobei R¹ die obige Bedeutung hat und R² einen geradkettigen oder verzweigten Alkylrest mit 1 bis 6 C-Atomen bedeutet. Bevorzugt sind die Methyl- und Ethylester der Acryl- oder Methacrylsäure, besonders bevorzugt ist der Methylester der Acrylsäure.

Die Herstellung der erfindungsgemäß zu verwendenden Copolymerisate erfolgt in an sich bekannter Weise durch Umsetzung der Ausgangsmonomeren unter katalytischer Einwirkung geringer Mengen organischer Peroxide in Gegenwart oder in Abwesenheit eines inerten Lösemittels. Bevorzugt ist die Polymerisation in Abwesenheit eines Lösemittels. Beispielsweise kann ein Gemisch aus Carbonsäure, Carbonsäureester und Radikalstarter zu vorgelegtem α-Olefin unter Rühren bei erhöhter Temperatur zugetropft werden. Nach Beendigung der Reaktion können nicht umgesetzte Monomere sowie flüchtige Zerfallprodukte des Peroxids durch Destillation abgetrennt werden. Als Radikalstarter werden bevorzugt organische Peroxide eingesetzt. Dabei ist die Reaktionstemperatur der Zerfallscharakteristik des jeweils verwendeten Peroxids anzupassen. Bei einer Temperatur von 100 bis 160°C sind beispielsweise Dialkylperoxide wie Di-t-butylperoxid oder Diaroylperoxide wie Dibenzoylperoxid gut geeignet. Das molare Verhältnis der Monomerkomponenten und damit der chemische Aufbau und die Polarität der Copolymerisate können in weiten Grenzen eingestellt werden. Damit besteht die Möglichkeit, die Eigenschaften des Trennmittels den jeweiligen anwendungstechnischen Erfordernissen in optimaler Weise anzupassen.

Die Monomeren werden in den folgenden Verhältnissen eingesetzt:

| | |
|---|---|
| α-Olefin | 20 bis 99,5, |
| | vorzugsweise 40 bis 95 Gew.-% |
| ungesättigte Carbonsäure | 0,1 bis 50, |
| | vorzugsweise 0,5 bis 30 Gew.-% |
| ungesättigter Carbonsäureester | 0,1 bis 60, |
| | vorzugsweise 1,0 bis 40 Gew.-% |

Die Reaktionstemperatur beträgt 70 bis 180, vorzugsweise 90 bis 160°C, der Reaktionsdruck 1,0 bis 5,0, vorzugsweise 1,0 bis 1,5 bar. Die Reaktionszeit beträgt vorzugsweise 1 bis 7 Stunden.

Neben dem Copolymerisat kann das erfindungsgemäße Trennmittel noch Harze, weitere Wachse und Elastifizierungsmittel enthalten. Der Gehalt an Copolymerisat beträgt bis zu 100 Gew.-%, vorzugsweise 40 bis 60 Gew.-%.

Das erfindungsgemäß zu verwendende, insbesondere seifenfreie Copolymerisat zeigt nicht nur während der Wärmebelastung ganz ausgezeichnete Farbstabilität, sondern vor allem eine Trennwirkung, die den Werten seifenhaltiger Montanwachse entspricht.

Die nachfolgenden Beispiele sollen die Erfindung erläutern.

Säure- und Verseifungszahlen bzw. Tropfpunkte wurden nach den DGF-Einheitsmethoden M-IV 2 (57) bzw. M-III 3 (75) bestimmt (Normen der Deutschen Gesellschaft für Fettwissenschaft e.V.). Die Schmelzviskosität wurde mit Hilfe eines Rotationsviskosimeters gemessen.

### Beispiel 1

### Herstellung eines C₂₄C₆₀-α-Olefin-Acrylsäure-Methylacrylat-Copolymerisats

In einem mit Thermometer, Rührer, Tropftrichter und Rückflußkühler ausgestattetem Fünfhalskolben wurden 500 g eines handelsüblichen C₂₄-C₆₀-α-Olefin-Schnittes vorgelegt und auf 140°C erhitzt. Bei dieser Temperatur tropfte man unter Rühren innerhalb von 5 Stunden eine Mischung aus 219,0 g Methylacrylat, 10,0 g Acrylsäure und 5,0 g Di-t-butylperoxid zu. Nach beendetem Zutropfen ließ man das Gemisch noch 30 min nachreagieren und destillierte flüchtige Bestandteile im Vakuum bei ca. 15 mbar und 170°C Badtemperatur ab. Das farblose, wachsartig erstarrende Reaktionsprodukt wurde in Schalen ausgegossen.

Kennzahlen: Säurezahl 11 mg KOH/g, Verseifungszahl ca. 160 mg KOH/g, Tropfpunkt 70°C, Schmelzviskosität 520 mPa.s (gemessen bei 90°C).

### Beispiel 2

### Herstellung eines 1-Tetradecen-Acrylsäure-Methylacrylat-Copolymerisats

Nach analogem Verfahren wie in Beispiel 1 beschrieben setzte man 196,0 g 1-Tetradecen, 131,7 g Methylacrylat, 4,0 g Acrylsäure und 2,6 g Di-t-butylperoxid miteinander um. Das resultierende farblose, halbfeste Terpolymerisat wies eine Säurezahl von 10 mg KOH/g und eine Verseifungszahl von ca. 205 mg KOH/g auf.

### Beispiel 3

### Herstellung eines seifenhaltigen Esters eines C₂₄-C₆₀-α-Olefin-Chromsäureoxidates

### Herstellung des Oxidates

100 kg C₃₀+-α-Olefin wurde auf 100°C erhitzt und mit 1250 dm³ einer schwefelsauren Lösung von CrO₃ (Gehalt ca. 100 g/dm³) versetzt. Die Mischung wurde gerührt, bis das Oxidationsmittel verbraucht war. Die organische Phase wurde abgetrennt, gewaschen und getrocknet. Man erhielt eine Mischung langkettiger Carbonsäuren mit einer SZ von 125.

### Herstellung des Versuchsproduktes

75 kg des oben genannten Oxidates wurden in den Reaktor eingefüllt, mit 4,9 kg Butandiol-1,3 versetzt und auf 100°C erhitzt. Bei dieser Temperatur wurden 200 g Methansulfonsäure 70%ig als Katalysator zugesetzt. Die Temperatur wurde auf 125°C erhöht. Unter Aufleiten von N₂ und Abdestillieren des Reaktionswassers wurde die Mischung gerührt, bis die SZ auf 51 abgesunken war. Dann wurde der Katalysator durch Zugabe von 80 g Ca(OH)₂ neutralisiert.

Anschließend wurden 1850 g Ca(OH)₂ zur Neutralisation des Produktes zugesetzt. Die Mischung wurde unter Abdestillieren des Reaktionswassers gerührt, bis die SZ auf 15 bis 20 abgesunken war. Der Ansatz wurde dann mit H₂O₂ gebleicht, getrocknet und filtriert.

Kennzahlen: Säurezahl 17 mg KOH/g, Vereifungszahl 94 mg KOH/g, Tropfpunkt 103°C, Schmelzviskosität ca. 50 mPa.s (gemessen bei 140°C)

### Beispiel 4

Die nach den Beispielen 1 bis 3 hergestellten Wachse wurden zur Überprüfung ihrer Wärmestabilität (Verfärbung) bei 180°C während 6 Stunden einer Temperung sowohl unter Luftzutritt als auch unter CO₂-Schutzgasatmosphäre unterzogen. Dabei zeigte es sich, daß die Copolymerisate nach Beispiel 1 und 2 den Temperungstest mit deutlich weniger Verfärbung überstanden, wobei der Zutritt oder Ausschluß von Luftsauerstoff offenbar ohne Einfluß war. Am besten schnitt jedoch ein Copolymerisat nach Beispiel 1 ab, bei dem fast keine Vergilbungsneigung nach 6-stündiger Temperaturbelastung festzustellen war.

Zur Ermittlung der Trennwirkung unter Laborbedingungen wurden die Wachse mit Hilfe eines einfachen Laborbeschichtungsgerätes (The K-Control Coater von R.K. Chemical Corp. Ltd., Royston/Herts., England) auf gestrichenes und satiniertes Papier (mattes Kunstdruckpapier 115 g) schmelzflüssig mit Hilfes eines 6 µm-Rakels aufgezogen. Es resultierten glatte, unterschiedlich hochglänzende Beschichtungen.

Auf die Wachsschicht wurde ein 5 cm breiter Klebebandfilm unter Anrollen aufgeklebt. Das so hergetellte Prüfmuster (5 cm x 17 cm) wurde in einer Instron-Zugprüfmaschine einem Abschälversuch (190°C) unterzogen. Abzuggeschwindigkeit: 200 m/Minute, Einspannlänge: 25 mm.

Als Vergleich wurden identische Beschichtungen mit seifenhaltigen Montanwachsen angefertigt. Als Beispiele für seifenhaltige Montanwachse können die bekannten calciumhaltigen Montanesterwachse mit den folgenden Kennzahlen dienen:
Tropfpunkt ca. 102°C; Säurezahl ca. 12 mg KOH/g; Verseifungszahl ca. 110 mg KOH/g; Dichte ca. 1,02 g/cm³; Fließhärte ca. 300 bar/23°C.

| Schälversuch | |
|---|---|
| Wachs aus Beispiel 1 | 3,3 N/5 cm |
| Wachs aus Beispiel 3 | 4,9 N/5 cm |
| Wachs aus Beispiel 4 | 4,0 N/5 cm |

## Patentansprüche

1. Wachshaltiges Trennmittel für thermisch transferierbare Beschriftungs- und Dekorationssysteme im wesentlichen bestehend aus einem Copolymerisat aus
20 bis 99,5 Gew.-Teilen Einheiten, die sich von einem C₁₂-C₆₀-α-Olefin ableiten,
0,1 bis 50 Gew.-Teilen Einheiten, die sich von einer Carbonsäure der Formel CH₂ = CR¹-COOH ableiten,
0,1 bis 60 Gew.-Teilen Einheiten, die sich von einem Carbonsäureester der Formel CH₂ = CR¹-COOR² ableiten, wobei in diesen Formeln R¹ für ein Wasserstoffatom oder eine Methylgruppe und R² für einen geradkettigen oder verzweigten Alkylrest mit 1 bis 6 C-Atomen stehen, und
0,0 bis 30 Gew.-Teilen Einheiten, die sich von Styrol, 3-Methylstyrol, 4-Methylstyrol oder α-Methylstyrol ableiten.

2. Wachshaltiges Trennmittel nach Anspruch 1, dadurch gekennzeichnet, daß das α-Olefin ein C₁₈ bis C₆₀-α-Olefin ist.

3. Wachshaltiges Trennmittel nach Anspruch 1, dadurch gekennzeichnet, daß das α-Olefin ein C₂₄ bis C₆₀-α-Olefin ist.

4. Wachshaltiges Trennmittel nach Anspruch 1, dadurch gekennzeichnet, daß der Carbonsäureester der Formel CH₂ = CR¹-COOR¹ ein Ester ist, in dessen Formel R¹ ein Wasserstoffatom oder eine Methylgruppe und R² eine Methyl- oder Ethylgruppe ist.

5. Wachshaltiges Trennmittel gemäß Anspruch 1, dadurch gekennzeichnet, daß es zu 40 bis 60 Gew.-% aus dem Copolymerisat besteht.
